# EUROPEAN PATENT APPLICATION

(11) **EP 0 825 104 A2**
(43) Date of publication of application: **25.02.1998**
(21) Application number: 97202449.1
(22) Date of filing: 07.08.1997
(51) Int. Cl.: B63H 21/12, B63H 19/00, B63B 35/73

(54) **Vessel provided with solar cells**

(30) Priority: 13.08.1996 NL 1003795
(71) Applicant: Brinks Westmaas B.V., 3273 LC Westmaas (NL)
(72) Inventor: Van Den Brink, Anthonie, 3273 LC Westmaas (NL)
(74) Representative: de Bruijn, Leendert C.

(57) **Abstract**

The invention relates to a vessel (1) comprising at least one float (2,2') and a deck (3) with a surface (4) suitable for people to walk on, for carrying passengers. The surface suitable for people to walk on is provided with solar cells (5). Preferably, the vessel comprises two floats with the deck located between them. The solar cells (5) can be mounted on replaceable panels, with a first panel type provided with solar cells and a second panel type without solar cells.

## Description

The invention relates to a vessel comprising at least one float, and a deck with a surface suitable for people to walk on, for carrying passengers.

DE 3 331 049 discloses a vessel comprising two or more floats with a deck which forms a surface suitable for people to walk on, on which a person can travel. The vessel is provided with a roof on which solar cells are fitted for propulsion of the vessel.

One aim of the present invention is to provide a vessel in which solar cells, for example for propulsion, can be integrated in a simple and effective manner. A further aim of the present invention is to provide a vessel in which the number of solar cells can be adjusted in a simple manner to, for example, the weather conditions or the sailing conditions. To this end a vessel according to the invention is characterised in that the surface suitable for people to walk on is provided with solar cells.

By providing the surface, suitable for people to walk on, with solar cells, use can be made of a relatively large available surface without it being necessary to fit an additional roof or other positioning surface for mounting the solar cells. A total power of 400 W can be achieved by using solar cells on a surface, suitable for people to walk on, measuring 1.5 by 2.5 metres. Preferably, the surface suitable for people to walk on is provided with a transparent, wear-resistant covering layer at the location of the solar cells. The covering layer can be made of, for example, a transparent plastic.

A preferred embodiment of the vessel according to the invention comprises two floats with the deck located between them. As a consequence of the slender shape of the floats, a speed of approximately 5 km/hour can be achieved with a low power, such as, for example, 400 W, and a low energy consumption. If batteries are charged by the solar cells, a speed of more than 10 kilometres per hour can be achieved by this means. With a "normal" rowing boat shape, this could not be achieved in a manner which is acceptable in practice by means of a solar cell electric drive.

Preferably, the deck comprises replaceable panels, with a first panel type which is provided with solar cells and a second panel type without solar cells. If the vessel is used without electric propulsion, for example is propelled by means of wind power or by means of oars, the panels with the solar cells can be replaced by panels without solar cells. As a result, the relatively expensive panels with solar cells will be less susceptible to wear and the risk of damage decreases. Furthermore, if solar cells within a single panel become defective, these can be repaired simply by replacing the panel concerned, without the entire vessel having to be taken out of use.

One embodiment of the vessel according to the invention will be explained in more detail below with reference to the single appended figure.

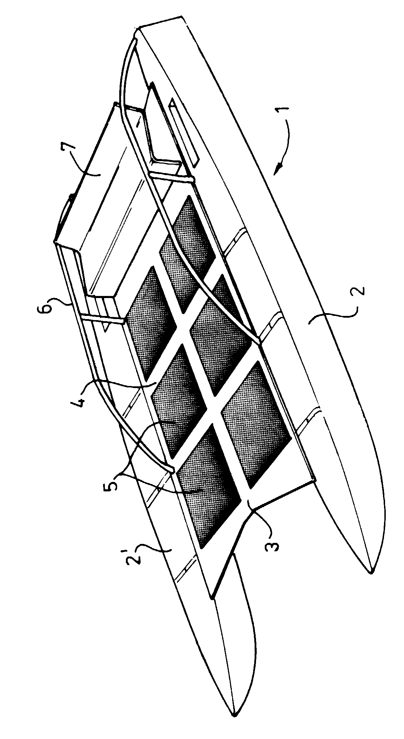

The figure shows an embodiment of the vessel according to the present invention. The vessel 1 comprises two floats 2, 2' with a deck 3 located between them. The deck 3 is provided with a surface 4, suitable for people to walk on, comprising six panels 5, each panel 5 being provided with solar cells. A seating element 7 is fitted in the stern of the vessel. Railings 6 are fitted along the longitudinal sides of the floats 2, 2'. Each panel comprises, for example, 36 solar cells and has a size of 0.7 by 0.7 metre. In this way a power of 6 x 50 W = 300 W can be generated with six panels. The solar cells are connected to a battery, which is not shown in the figure. This battery can be located, for example, beneath the seating element 7. The panels 5 can be removed from the deck 3 and, for the purposes of repair or replacement, can be exchanged for similar panels which are likewise provided with solar cells. It is also possible to replace the replaceable panels 5 by panels which are not provided with solar cells.

The panels 5 are provided with a transparent, wear-resistant layer, such as, for example, polycarbonate, so that the panels are not damaged when people walk over them.

The floats 2, 2' are preferably joined to one another by aluminium tubes. The tubes are firmly fixed to the upper deck of the floats 2, 2' by means of bolts which fit in slots.

The tubes serve not only for fixing the floats 2, 2' but also as support and positioning beams for the deck 3. Preferably, the railings 6, the seating element 7 and the like are of modular construction so that these can be replaced by similar elements of a different shape or size.

As a consequence of the slender shape of the floats 2, 2' a speed of above 10 kilometres per hour can be achieved with low power.

## Claims

1. Vessel comprising at least one float, and a deck with a surface suitable for people to walk on, for carrying passengers, characterised in that the surface suitable for people to walk on is provided with solar cells.

2. Vessel according to Claim 1, characterised in that the surface suitable for people to walk on is provided with a transparent, wear-resistant covering layer at least at the location of the solar cells.

3. Vessel according to Claim 1 or 2, characterised in that the vessel comprises two floats with the deck located between them.

4. Vessel according to one of the preceding claims, characterised in that the deck comprises replaceable panels, with a first panel type provided with solar cells and a second panel type without solar cells.
